# FASCICULE DE BREVET EUROPEEN

(11) **EP 4 636 787 B1**
(45) Date de publication et mention de la délivrance du brevet: **18.11.2026**
(21) Numéro de dépôt: 24305599.3
(22) Date de dépôt: 15.04.2024
(51) Int. Cl.: H01B 17/30, B60R 16/02, H01F 27/04, H01R 13/52, H02G 3/22

(54) **DISPOSITIF PASSE-BARRE ET PROCÉDÉ DE MONTAGE DE CE DISPOSITIF**
STANGENDURCHFÜHRUNGSVORRICHTUNG UND VERFAHREN ZUR MONTAGE DER STANGENDURCHFÜHRUNGSVORRICHTUNG
BAR-LEAD DEVICE AND METHOD FOR MOUNTING SAID DEVICE

(43) Date de publication de la demande: 22.10.2025
(73) Titulaire: Pioch, 06510 Carros (FR)
(72) Inventeur: PIOCH, Olivier, 06200 Nice (FR)
(74) Mandataire: Lavoix

(56) Documents cités:
- EP-A1- 1 335 465
- EP-A1- 3 159 901
- CN-B- 112 310 729

## Description

La présente invention concerne un dispositif passe-barre destiné à être monté au travers d'un orifice ménagé dans une paroi d'un équipement électrique au travers duquel passe une barre conductrice.

L'invention concerne aussi un procédé de montage d'un tel dispositif.

Dans de nombreuses applications électriques, telles que les transformateurs, les batteries ou encore les onduleurs, il est nécessaire de transmettre de l'énergie électrique au travers d'une paroi délimitant une enceinte dans laquelle se trouve un équipement électrique.

Les câbles de transport du courant électrique ne peuvent pas traverser directement les parois au travers d'ouvertures, compte tenu de la nécessité d'assurer l'étanchéité de l'enceinte, ainsi que des risques de sectionnement de ces câbles.

Ainsi, il est connu d'utiliser des dispositifs dits "passe-barre", qui permettent de maintenir rigidement une barre conductrice de l'électricité à la traversée d'une paroi tout en garantissant l'étanchéité à l'eau et/ou à l'air. La barre conductrice fait alors saillie de part et d'autre de la paroi par l'intermédiaire du dispositif passe-barre qui assure la tenue mécanique et l'étanchéité aux fluide, la barre étant équipée à chaque extrémité de moyens de connexion à des câbles électriques circulant de part et d'autre de la paroi.

Le document EP3159901 décrit un dispositif passe-barre comprenant un corps traversé de part en part par un conduit de réception de ladite barre et un couvercle comportant un logement dans lequel est engagé le corps. L'étanchéité aux fluides est assurée par un joint annulaire que l'on fait coulisser lors du montage le long de la barre et qui est comprimé entre le corps et le couvercle à l'issue de l'assemblage de ces derniers sur la barre. Autres documents pertinents sont: EP1335465A1 et CN112310729B
Toutefois, il est difficile de faire coulisser les joints usuels, notamment les joints élastomères, sur les barres métalliques. Ce dispositif passe-barre est donc long à monter et à démonter.

Pour faciliter le positionnement du joint d'étanchéité, il est connu de graisser la barre. Cependant, le graissage entraîne des risques de pollution de l'intérieur de l'enceinte de l'équipement électrique.

Un but de l'invention est donc de proposer un passe-barre présentant une bonne tenue mécanique, permettant une isolation électrique et une étanchéité à l'air et/ou aux liquides satisfaisantes, et dont le montage et le démontage sont aisés et ne nécessitent ni graisse ni colle.

A cet effet, l'invention a pour objet un dispositif passe-barre destiné à être monté au travers d'un orifice ménagé dans une paroi d'un équipement électrique pour le passage d'une barre conductrice à travers la paroi, la paroi séparant un volume interne de l'équipement électrique d'un milieu extérieur, le dispositif passe-barre comprenant :
a) une entretoise inférieure et une entretoise supérieure, s'étendant chacune selon une direction longitudinale et définissant chacune un conduit traversant d'engagement de la barre ;
b) une gaine, s'étendant selon la direction longitudinale entre une extrémité inférieure à positionner à l'intérieur du volume interne et une extrémité supérieure à positionner du côté du milieu extérieur, et comprenant :
   - une paroi intérieure qui définit un conduit inférieur de réception de l'entretoise inférieure et un conduit supérieur de réception de l'entretoise supérieure, les conduits inférieur et supérieur étant séparés dans la direction longitudinale par un joint intérieur faisant saillie à partir de la paroi intérieure sur toute sa périphérie,
   - un joint extérieur faisant saillie à partir d'une paroi extérieure de la gaine sur toute sa périphérie, le joint extérieur étant positionné à distance de l'extrémité inférieure et de l'extrémité supérieure de la gaine dans la direction longitudinale,
c) un corps configuré pour s'étendre de part et d'autre de la paroi de l'équipement électrique, traversé de part en part selon la direction longitudinale par un conduit d'insertion de la gaine et comprenant :
   - un épaulement configuré pour venir en appui sur la paroi de l'équipement électrique sur toute la périphérie de l'orifice,
   - des moyens de fixation amovibles sur la paroi de l'équipement électrique du côté du milieu extérieur, et
   - un logement de réception du joint extérieur s'étendant radialement relativement à la direction longitudinale à partir du conduit d'insertion, le logement de réception étant configuré pour que le joint extérieur soit en contact avec une surface de contact inférieure du corps et avec une surface de contact supérieure formée par une paroi du logement de réception lorsque le corps est fixé sur la paroi de l'équipement électrique ;
la gaine et les entretoises inférieure et supérieure étant formées dans des matériaux isolants électriques et configurés pour que la gaine soit plus souple que les entretoises inférieure et supérieure.

La gaine étant plus souple que les entretoises, elle est facile à insérer dans le corps.

Le joint extérieur permet d'assurer l'étanchéité de la jonction entre la gaine et le corps.

Les entretoises, plus rigides que la gaine, permettent une insertion facilitée de la barre. Une telle insertion ne serait pas possible directement dans la gaine sans graissage, du fait de sa plus grande souplesse. En d'autres termes, la capacité d'assemblage sur la barre est conférée à la gaine par les entretoises démontables.

Le joint intérieur permet d'assurer l'étanchéité entre les entretoises.

Globalement, la combinaison de la gaine et des entretoises permet le montage et le démontage facile du dispositif passe-barre sur une barre, notamment par l'extérieur d'un équipement électrique sur lequel est monté la barre et sans démonter cette barre, puisqu'aucun joint ne doit coulisser directement le long de la barre. Dans le même temps, le positionnement des joints intérieur et extérieur permet de garantir l'étanchéité du dispositif une fois assemblé.

Le dispositif passe-barre selon l'invention est notamment utilisable pour un équipement électrique dans lequel le fluide intérieur est de l'air et le milieu extérieur est aussi de l'air.

Suivant d'autres aspects avantageux de l'invention, le passe-barre comprend une ou plusieurs des caractéristiques suivantes, prises isolément ou suivant toutes les combinaisons techniquement possibles :
le corps comprend :
   a) un élément traversant
      - configuré pour s'étendre de part et d'autre de la paroi de l'équipement électrique,
      - traversé de part en part selon la direction longitudinale par une portion inférieure du conduit d'insertion de la gaine,
      - comprenant la surface de contact inférieure du joint extérieur et au moins une partie de l'épaulement ; et
   b) un couvercle traversé de part en part par une portion supérieure du conduit d'insertion de la gaine, le couvercle comprenant les moyens de fixation amovibles et la surface de contact supérieure du joint extérieur,
      le logement de réception du joint extérieur étant en outre un logement de réception de l'élément traversant ;
le corps comprend en outre un joint d'étanchéité configuré pour assurer l'étanchéité à l'air du logement de réception au niveau de la paroi de l'équipement électrique lorsque l'élément traversant y est reçu et que le corps est fixé sur ladite paroi ;
le joint intérieur est configuré pour être comprimé entre les entretoises inférieure et supérieure ;
la gaine est formée dans un matériau élastomère ;
les entretoises inférieure et supérieure sont formées chacune dans un matériau choisi parmi un plastique thermodurcissable et un matériau thermoplastique ;
une pluralité de jupes espacées les unes par rapport aux autres selon la direction longitudinale sont formées à proximité de l'extrémité inférieure et/ou de l'extrémité supérieure de la gaine ;
les jupes formées à proximité de l'extrémité supérieure sont plus larges selon une direction transversale orthogonale à la direction longitudinale et/ou plus espacées les unes des autres selon la direction longitudinale que les jupes formées à proximité de l'extrémité inférieure ;
la gaine est monobloc ;
le joint intérieur et/ou le joint extérieur sont configurés pour assurer l'étanchéité à l'air du dispositif passe-barre lorsqu'il est monté sur la barre ;

Dans le cas où la gaine est monobloc, l'étanchéité du dispositif passe-barre et l'isolation électrique permise par ce dispositif sont particulièrement satisfaisantes. Il n'y a notamment aucun risque de fuite au niveau des joints intérieur et extérieur.

L'invention concerne également un équipement électrique comprenant un passe-barre selon l'un quelconque des modes de réalisation précédents.

L'invention concerne en outre un procédé de montage d'un passe-barre selon l'un quelconque des modes de réalisation précédents sur un équipement électrique, le procédé comprenant :
a) l'insertion de la gaine dans le conduit d'insertion de la gaine, de sorte que le joint extérieur soit positionné dans le logement de réception, puis l'insertion de l'entretoise inférieure dans le conduit inférieur et l'insertion de l'entretoise supérieure dans le conduit supérieur de sorte que l'entretoise inférieure et l'entretoise supérieure viennent en contact avec le joint intérieur et de part et d'autre du joint intérieur, de manière à former un dispositif passe-barre préassemblé ;
b) le coulissement du dispositif passe-barre préassemblé sur la barre à partir d'une extrémité de la barre située du côté du milieu extérieur jusqu'à ce que le corps vienne en contact avec la paroi de l'équipement électrique ;
c) la fixation du corps sur la paroi de l'équipement électrique au moyen des moyens de fixation amovibles.

Suivant un autre aspect avantageux de l'invention, l'étape b) du procédé est mise en oeuvre sans recourir à un lubrifiant.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue en coupe selon un plan comprenant la direction longitudinale d'un mode de réalisation du passe-barre selon l'invention installé sur une barre d'un équipement électrique ;
[Fig.2] la figure 2 est une vue en trois dimensions du passe-barre de la figure 1 en cours d'assemblage, avant insertion de la barre ;
[Fig.3] la figure 3 est une vue en trois dimensions du passe-barre de la figure 1 en cours d'assemblage, après insertion de la barre et avant fixation sur la paroi de l'équipement électrique ;
[Fig. 4] la figure 4 est une vue en coupe de la gaine de la figure 1 seule ; et
[Fig. 5] la figure 5 est une vue en coupe d'une portion du couvercle et de l'élément traversant de la figure 1 seuls.

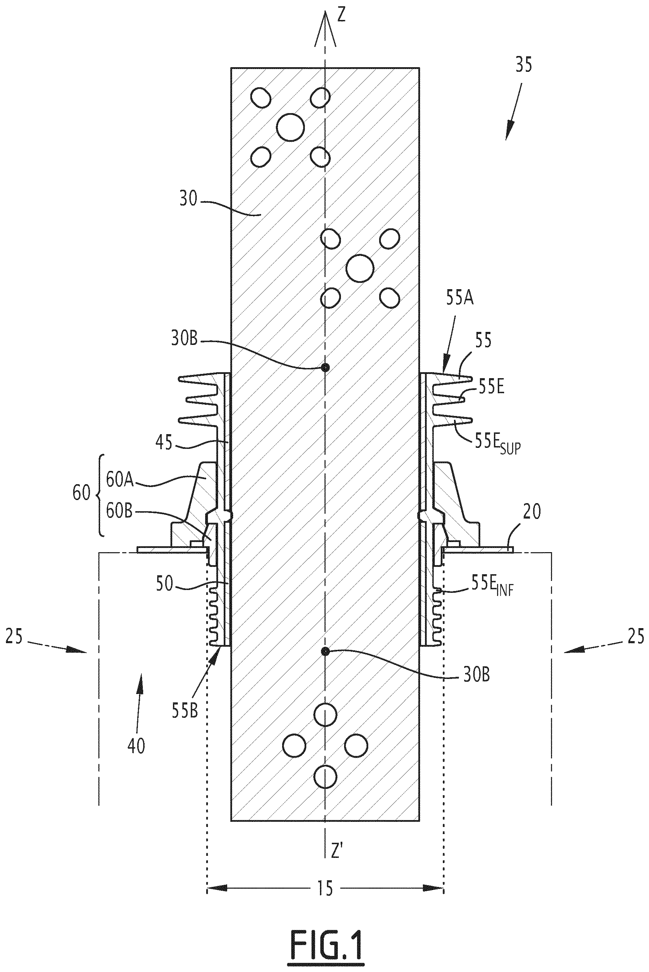

Le dispositif passe-barre 10 selon l'invention est décrit en référence à la figure 1.

Le dispositif passe-barre 10 est destiné à être monté au travers d'un orifice 15 ménagé dans une paroi 20 d'un équipement électrique 25 pour le passage à travers la paroi 20 d'une barre 30 conductrice de l'électricité.

L'équipement électrique 25 est par exemple un transformateur, une batterie ou encore un onduleur.

La paroi 20 est configurée pour être isolante électriquement.

La paroi 20 est étanche aux fluides.

La paroi 20 sépare un volume interne de l'équipement électrique 25 d'un milieu extérieur 35 environnant l'équipement électrique 25.

Le milieu extérieur 35 est un milieu fluide. Le milieu extérieur peut comprendre un gaz, par exemple de l'air. Le milieu extérieur peut comprendre un fluide, notamment un fluide isolant électrique.

Le volume interne de l'équipement électrique 25 est partiellement rempli par un fluide interne 40, notamment un fluide isolant électrique. Le fluide interne 40 est par exemple un gaz tel que l'air, ou encore un liquide organique tel qu'une huile diélectrique.

A titre d'exemple, dans le cas où le milieu extérieur 35 et le fluide interne 40 sont gazeux, le dispositif passe-barre 10 est un dispositif passe-barre gaz-gaz, par exemple air-air.

Dans le cas où le milieu extérieur 35 est gazeux et le fluide interne 40 est liquide, le dispositif passe-barre 10 est un dispositif passe-barre gaz-liquide, par exemple gaz-huile diélectrique.

Dans le cas où le milieu extérieur 35 est liquide et le fluide interne 40 est liquide, le dispositif passe-barre 10 est un dispositif passe-barre liquide-liquide, par exemple huile diélectrique-huile diélectrique.

La barre 30 est configurée pour assurer la conduction électrique entre au moins un conducteur électrique placé dans le volume interne de l'équipement électrique 25 et au moins un conducteur électrique placé dans le milieu extérieur 35 (non représentés).

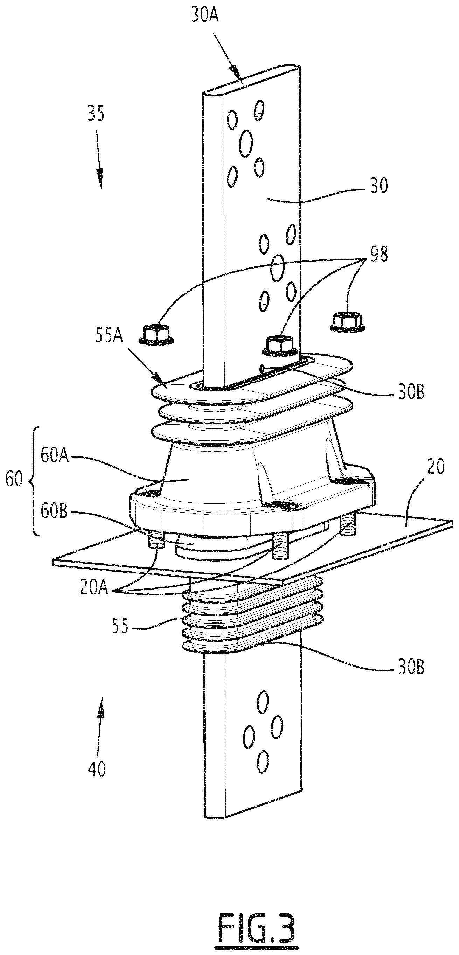

La barre 30 est par exemple cylindrique, comme représenté sur la figure 3.

Dans ce cas, une base 30A de la barre 30 peut avoir sensiblement la forme d'un disque, ou encore la forme d'un rectangle d'extrémités arrondies comme représenté sur la figure 3.

La barre 30 peut comporter un ou plusieurs éléments 30B d'aide au positionnement tel que des goupilles, configurés pour faciliter le positionnement de la barre 30 relativement à la paroi 20.

Le dispositif passe-barre 10 comprend une entretoise supérieure 45, une entretoise inférieure 50, une gaine 55 et un corps 60.

L'entretoise supérieure 45 s'étend selon une direction longitudinale Z'Z.

La direction longitudinale Z'Z est de préférence localement sensiblement orthogonale à une portion de la paroi 20 bordant l'orifice 15, lorsque le dispositif passe-barre 10 est assemblé sur la paroi 20.

L'entretoise supérieure 45 définit un conduit traversant 45A d'engagement de la barre 30.

Une section du conduit traversant 45A dans un plan orthogonal à la direction longitudinale Z'Z a donc une forme analogue à une section de la barre 30 dans ce plan.

Notamment, si la barre 30 est cylindrique, le conduit traversant 45A est lui aussi cylindrique, une base 45B du conduit traversant 45A étant alors de la même forme que la base 30A de la barre 30. Ce cas est représenté sur les figures 1 à 3.

L'entretoise supérieure 45 est de préférence formée dans un matériau choisi pour permettre le coulissement de la barre 30 à l'intérieur du conduit traversant 45A à sec, c'est-à-dire sans utiliser de lubrifiant.

De préférence, le matériau dans lequel l'entretoise supérieure 45 est formée ne se déforme pas lors de l'insertion de la barre 30 ni lorsque l'on fait coulisser la barre 30 dans le conduit traversant 45A selon la direction longitudinale Z'Z.

Notamment, l'entretoise supérieure 45 comprend, ou encore est constituée essentiellement ou totalement d'un matériau choisi parmi les plastiques thermodurcissables ou les matériaux thermoplastiques.

L'entretoise inférieure 50 s'étend selon la direction longitudinale Z'Z.

L'entretoise inférieure 50 définit un conduit traversant 50A d'engagement de la barre 30.

L'entretoise inférieure 50 est analogue à l'entretoise supérieure 45.

Dans un mode de réalisation particulier représenté sur les figures 1 à 3, les entretoises supérieure 45 et inférieure 50 sont identiques et interchangeables.

Les entretoises supérieure 45 et inférieure 50 sont destinées à être insérées dans la gaine 55.

La gaine 55 s'étend selon la direction longitudinale Z'Z entre une extrémité supérieure 55A à positionner du côté du milieu extérieur 35 et une extrémité inférieure 55B à positionner à l'intérieur du volume interne de l'équipement électrique 25.

La gaine 55 comprend une paroi intérieure 55C qui définit un conduit supérieur 65 de réception de l'entretoise supérieure 45 et un conduit inférieur 70 de réception de l'entretoise inférieure 50 s'étendant chacun selon la direction longitudinale Z'Z.

Une section du conduit supérieur 65 (respectivement inférieur 70) dans un plan orthogonal à la direction longitudinale Z'Z a donc une forme analogue à une section de l'entretoise supérieure 45 (respectivement inférieure 50) dans ce plan.

Notamment, si l'entretoise supérieure 45 (respectivement inférieure 50) est cylindrique, le conduit supérieur 65 (respectivement inférieur 70) est lui aussi cylindrique une base du conduit supérieur 65 (respectivement inférieur 70) étant alors de la même forme qu'une base de l'entretoise supérieure 45 (respectivement inférieure 50). Ce cas est représenté sur les figures 1 à 3.

Les conduits supérieur 65 et inférieur 70 sont séparés dans la direction longitudinale Z'Z par un joint intérieur 75 faisant saillie à partir de la paroi intérieure 55C sur toute sa périphérie.

Le joint intérieur 75 est configuré pour assurer l'étanchéité de la liaison entre la gaine 55 et les entretoises supérieure 45 et inférieure 50 au fluide interne 40 et au fluide du milieu extérieur 35 lorsque le passe-barre 10 est assemblé sur la barre 30 du dispositif électrique 25.

La gaine 55 est formée dans un matériau isolant électrique.

La gaine 55 est formée dans un matériau résistant à la gamme de températures atteintes par la barre 30 lors du fonctionnement nominal de l'équipement électrique 25.

La gaine 55 est formée dans un matériau plus souple que les matériaux dans lesquels les entretoises supérieure 45 et inférieure 50 sont formées.

Notamment, la gaine 55 peut être formée dans un matériau configuré pour se déformer élastiquement lorsque l'entretoise supérieure 45 (respectivement inférieure 50) est insérée et/ou coulisse selon la direction longitudinale Z'Z dans le conduit supérieur 65 (respectivement inférieur 70).

La gaine 55 peut aussi être formée dans un matériau configuré pour se déformer élastiquement lorsque la gaine est insérée dans le corps 60 comme cela sera décrit plus loin.

Par exemple, la gaine 55 comprend, ou est constituée essentiellement ou totalement d'un matériau élastomère, par exemple choisi parmi les silicones.

La gaine 55 comprend en outre un joint extérieur 80 faisant saillie à partir d'une paroi extérieure 55D de la gaine 55 sur toute sa périphérie.

Le joint extérieur 80 est configuré pour assurer l'étanchéité de la liaison entre la gaine 55 et le corps 60 lorsque le passe-barre 10 est assemblé sur la barre 30 du dispositif électrique 25 comme cela sera décrit plus loin.

A cette fin, le joint extérieur 80 est positionné à distance de l'extrémité inférieure 55B et de l'extrémité supérieure de la gaine 55A dans la direction longitudinale.

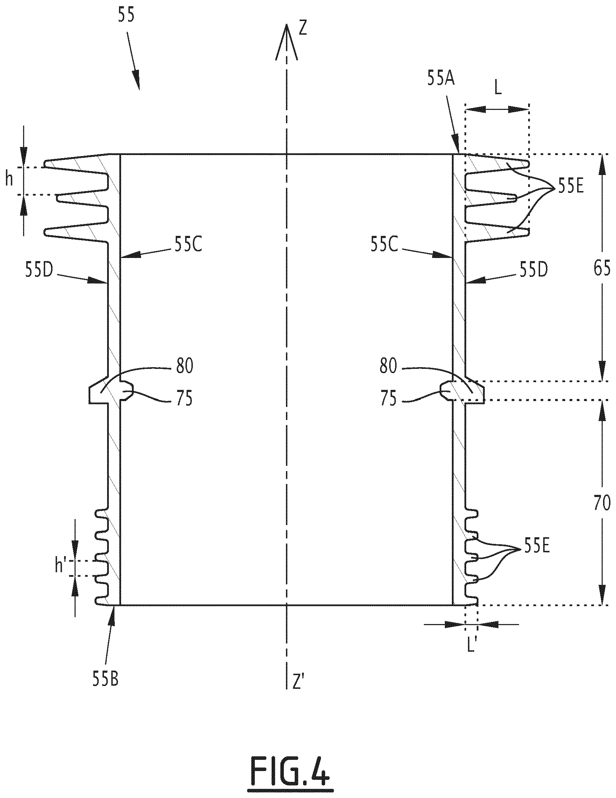

Dans un mode de réalisation particulier représenté sur les figures 1 à 4, le joint extérieur 80 est positionné au même niveau que le joint intérieur 75 selon la direction longitudinale Z'Z.

Le joint intérieur 75 et/ou le joint extérieur 80 peuvent être formés dans le même matériau que le matériau de la portion de gaine 55 située entre la paroi intérieure 55C et la paroi extérieure 55D.

Par exemple, le joint intérieur 75 et/ou le joint extérieur 80 comprennent, ou sont constitués essentiellement ou totalement d'un matériau élastomère.

Dans un mode de réalisation particulier, la gaine 55 est monobloc, comme représenté sur les figures 1 à 4.

Dans un mode de réalisation particulier, la gaine 55 comprend une pluralité de jupes 55E espacées les unes par rapport aux autres selon la direction longitudinale Z'Z.

Les jupes 55E font saillie à partir de la paroi extérieure 55D.

Les jupes 55E sont formées à proximité de l'extrémité inférieure 55B et/ou à proximité de l'extrémité supérieure 55A de la gaine 55 selon la direction longitudinale Z'Z.

Les jupes 55E permettent d'améliorer l'isolation électrique fournie par la gaine 55.

Les jupes 55E formées à proximité de l'une et/ou l'autre des extrémités inférieure 55B et supérieure 55A peuvent avoir la même forme et/ou être régulièrement espacées selon la direction longitudinale Z'Z.

Dans un mode de réalisation particulier représenté sur les figures 1 à 4, l'espacement h, h' entre les jupes 55E est plus grand au niveau de l'extrémité supérieure 55A qu'au niveau de l'extrémité inférieure 55B. Cette disposition peut être envisagée notamment dans les équipements électriques 25 pour lesquels les paramètres physiques du fluide interne 40, par exemple le taux d'humidité, sont bien contrôlées. Dans ce cas, la taille et/ou l'espacement des jupes 55E et leur espacement peuvent être inférieurs au niveau de l'extrémité inférieure 55B en comparaison à l'extrémité supérieure 55A. Cette disposition permet alors de faciliter l'insertion du corps 60 du côté de l'extrémité inférieure 55A sans que les qualités d'isolation électrique du dispositif 10 ne soient impactées.

Cette disposition est avantageuse notamment dans le cas où le milieu extérieur 35 est l'air et le fluide interne 40 est un liquide.

Dans un mode de réalisation particulier représenté sur les figures 1 à 4, la largeur L, L' des jupes 55E selon une direction transversale Y'Y orthogonale à la direction longitudinale Z'Z est plus grande au niveau de l'extrémité supérieure 55A qu'au niveau de l'extrémité inférieure 55A. Cette disposition est avantageuse notamment dans le cas où le milieu extérieur 35 est l'air et le fluide interne 40 est un liquide.

Une jupe 55E formée à proximité de l'extrémité supérieure 55A peut former un élément supérieur de blocage 55Esup du corps 60 en translation selon l'axe longitudinal Z'Z.

Une jupe 55E formée à proximité de l'extrémité inférieure 55B peut former un élément inférieur de blocage 55Einf du corps 60 en translation selon l'axe longitudinal Z'Z.

Les jupes 55E peuvent être formées dans le même matériau que le matériau de la portion de gaine 55 située entre la paroi intérieure 55C et la paroi extérieure 55D.

Par exemple, les jupes 55E comprennent, ou sont constitués essentiellement ou totalement d'un matériau élastomère.

Dans un mode de réalisation particulier, la gaine 55 est monobloc, comme représenté sur les figures 1 à 4.

La gaine 55 est destinée à être reçue dans le corps 60.

Le corps 60 est configuré pour s'étendre de part et d'autre de la paroi 20.

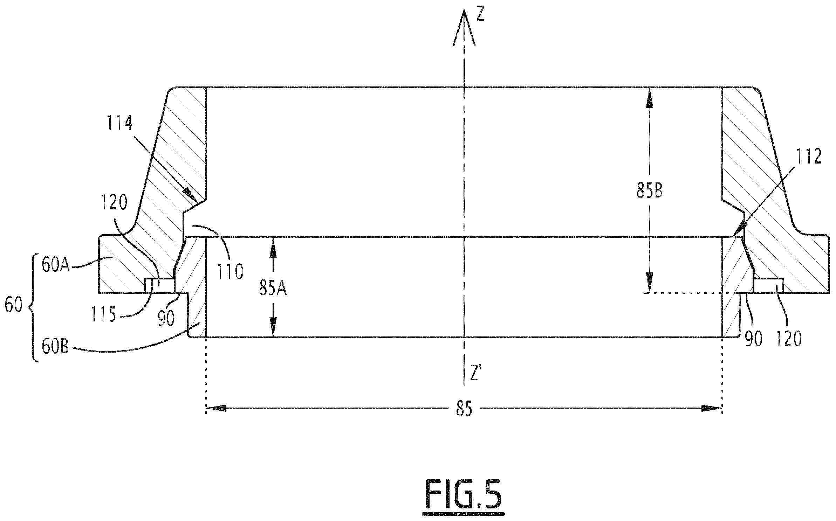

Le corps 60 est traversé de part en part selon la direction longitudinale par un conduit d'insertion 85 de la gaine 55 s'étendant selon la direction longitudinale Z'Z, comme visible sur la figure 5.

Notamment, si la barre 30 est cylindrique, le conduit d'insertion 85 est lui aussi cylindrique, une base du conduit d'insertion 85 étant alors de la même forme que la base 30A de la barre 30 et configurée pour recevoir l'ensemble formé par la gaine 55, les entretoises 45 et 50 et la barre 30. Ce cas est représenté sur les figures 1 à 3.

Dans un mode de réalisation particulier, représenté sur la figure 5, le corps 60 est formé d'un couvercle 60A et d'un élément traversant 60B. Cette disposition permet de faciliter l'assemblage et le démontage du dispositif passe-barre 10 comme cela décrit plus loin.

Le couvercle 60A peut comprendre ou être constitué essentiellement ou totalement d'un matériau plastique ou d'un métal.

L'élément traversant 60B peut comprendre ou être constitué essentiellement ou totalement d'un matériau plastique.

Dans ce cas, l'élément traversant 60B est configuré pour s'étendre de part et d'autre de la paroi 20 de l'équipement électrique 25 et le couvercle 60A est destiné à être placé du côté du milieu extérieur 35, au-dessus de l'élément traversant 60B et de la paroi 20.

Dans ce cas, le conduit d'insertion 85 comprend une portion inférieure 85A traversant de part en part l'élément traversant 60B et une portion supérieure 85B traversant de part en part le couvercle 60A.

Le corps 60 comprend un épaulement 90 configuré pour venir en appui sur la paroi 20 sur toute la périphérie de l'orifice 15.

Dans le cas où le corps 60 comprend l'élément traversant 60B, l'élément traversant 60B comprend au moins une partie de l'épaulement 90, comme visible sur la figure 5.

Le corps 60 comprend également des moyens de fixation amovibles sur la paroi 20 du côté du milieu extérieur 35.

Dans le cas où le corps 60 comprend le couvercle 60A, les moyens de fixation amovibles peuvent comprendre une pluralité d'éléments taraudés 98 complémentaires d'éléments filetés 20A faisant saillie dans le milieu extérieur 35 à partir de la paroi 20, ainsi qu'une pluralité de trous traversants 100 d'axes parallèles à la direction longitudinale Z'Z et répartis sur une bordure périphérique 105 du couvercle destinée à surplomber directement la paroi 20 de l'équipement électrique 25, comme représenté sur la figure 3.

Le corps 60 comprend encore un logement 110 de réception du joint extérieur 80.

Le logement 110 s'étend radialement relativement à la direction longitudinale Z'Z à partir du conduit d'insertion 85.

Le logement 110 est configuré pour que le joint extérieur 80 assure l'étanchéité aux fluides, notamment à l'air, de la liaison entre le corps 60 et la gaine 55 lorsque le passe-barre 10 est assemblé sur la barre 30 du dispositif électrique 25.

Notamment, le logement 110 est configuré pour que le joint extérieur soit en contact à la fois avec une surface de contact inférieure 112 du corps 60 lorsque le corps 60 est fixé sur la paroi 20 de l'équipement électrique 25 et avec une surface d'appui supérieure 114 formée par une paroi du logement de réception 110.

Avantageusement, les moyens de fixation amovibles sont configurés pour que le joint extérieur 80 soit comprimé lorsque le corps 60 est fixé sur la paroi 20 de l'équipement électrique 25.

Dans le cas où le corps 60 comprend le couvercle 60A et l'élément traversant 60B, le logement 110 de réception du joint extérieur 80 est formé dans le couvercle 60A, et ce logement 110 est en outre un logement de réception de l'élément traversant 60B. Cette disposition est représentée sur la figure 5.

Dans ce cas, l'élément traversant 60B comprend la surface de contact inférieure 112 du joint extérieur 80 et le couvercle 60A comprend la surface de contact supérieure 114.

Par exemple, une surface supérieure de l'élément traversant 60B forme la surface de contact inférieure 112, comme cela est représenté sur la figure 5. Un épaulement du couvercle 60A peut alors définir la surface de contact supérieure 114, comme cela est représenté sur la figure 5.

Le joint extérieur 80 est en contact avec à la fois la surface de contact inférieure 112 et la surface de contact supérieure 114, et placé entre ces deux surfaces, lorsque le dispositif passe-barre 10 est assemblé.

Dans un mode de réalisation particulier, le couvercle 60A comprend un deuxième logement 115 de réception d'un joint d'étanchéité 120, destiné à être positionné en appui sur la paroi 20 du côté du milieu extérieur 35 sur toute la périphérie de l'élément traversant 60B.

Avantageusement, les moyens de fixation amovibles 98, 100 sont configurés pour que le joint d'étanchéité 120 soit comprimé lorsque le couvercle 60A est fixé sur la paroi 20.

Le dispositif passe-barre 10 peut être monté sur l'équipement électrique 25 selon le procédé décrit ci-après.

Le procédé comprend la formation d'un passe-barre 10 préassemblé.

La formation du passe-barre 10 préassemblé comprend l'insertion de la gaine 55 dans le conduit d'insertion 85 de manière à positionner le joint extérieur 80 dans le logement de réception 110.

La gaine 55 étant plus souple que les entretoises 45, 50, l'insertion de la gaine 55 dans le conduit d'insertion 85 peut comprendre la déformation élastique de la gaine 55 de manière à faciliter le positionnement le joint extérieur 80 dans le logement de réception 110.

De ce fait, l'insertion de la gaine 55 peut être réalisée sans recourir à un lubrifiant.

Dans le cas où le corps 60 comprend l'élément traversant 60B et le couvercle 60A, la gaine 55 peut dans un premier temps être insérée dans le couvercle 60A, de manière à ce que le couvercle 60A se trouve entre l'extrémité supérieure 55A de la gaine 55 et le joint extérieur 80.

En particulier, la gaine 55 peut être facilement insérée par son extrémité inférieure 55B dans le cas où celle-ci comprend des jupes 55E de dimensions inférieures à celles formées au niveau de l'extrémité supérieure 55A.

Le cas échéant, le couvercle 60A peut par exemple être placé en contact avec l'élément de blocage supérieur 55Esup et/ou avec le joint extérieur 80.

Dans un deuxième temps, la gaine 55 peut être insérée dans l'élément traversant 60B de manière à ce que l'élément traversant 60B se trouve entre l'extrémité inférieure 55B de la gaine 55 et le joint extérieur 80.

Là encore, l'insertion est facilitée au niveau de l'extrémité inférieure 55B si les jupes 55E au niveau de l'extrémité inférieure 55B sont de dimensions inférieures à celles formées au niveau de l'extrémité supérieure 55A.

Le cas échéant, l'élément traversant 60B peut par exemple être placé en contact avec l'élément de blocage inférieur 55Einf et/ou avec le joint extérieur 80.

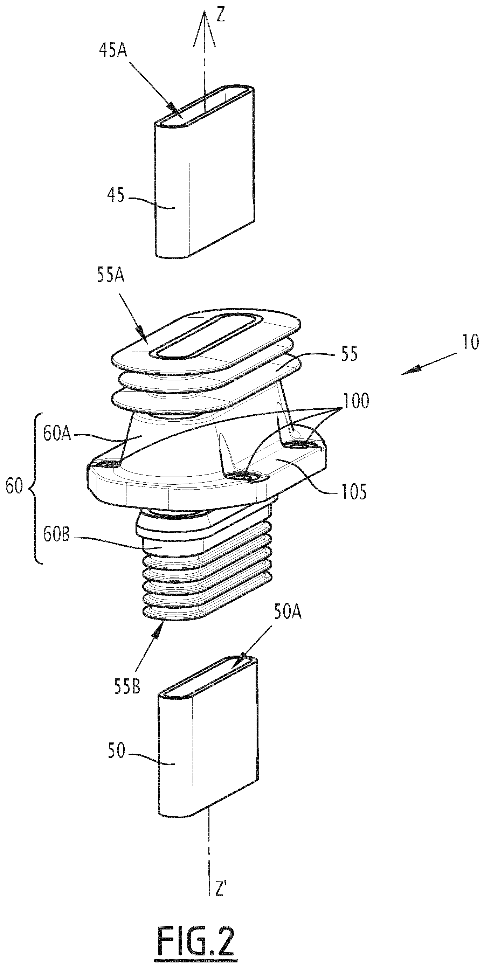

Un exemple d'assemblage obtenu à l'issue de cette étape est représenté sur la figure 2.

Une fois la gaine 55 insérée dans le conduit d'insertion 85, l'entretoise supérieure 45 est insérée dans le conduit supérieur 65, et l'entretoise inférieure 50 est insérée dans le conduit inférieur 70.

Notamment, chacune des entretoises supérieure 45 et inférieure 50 peut être placée en contact avec le joint intérieur 75.

Cette étape peut comprendre la déformation élastique de la gaine 55.

On notera que les entretoises 45, 50 n'ont à coulisser au-dessus d'aucune partie saillante dans le conduit d'insertion 65, 70 respectif, de sorte que l'insertion de chacune des entretoises 45, 50 dans la gaine 55 peut être réalisée rapidement et sans recourir à un lubrifiant.

On obtient alors un dispositif passe-barre 10 préassemblé, prêt à être positionné sur l'équipement électrique 25.

Les éléments de blocage inférieur 55Einf et supérieur 55Esup peuvent être positionnés de façon à ce que le joint intérieur 75 et/ou le joint extérieur 80 soient non comprimés dans le dispositif passe-barre 10 préassemblé. Eventuellement, le joint extérieur 80 n'est alors pas obligatoirement dans son logement de réception 110 et/ou le joint intérieur 75 n'est pas obligatoirement en contact avec l'une ou l'autre des entretoises 45, 50 dans le dispositif passe-barre 10 préassemblé.

Cette disposition confère au dispositif passe-barre 10 préassemblé une aptitude à la déformation supplémentaire, ce qui facilite son assemblage sur la barre 30 suivant les étapes qui sont décrites ci-après.

La formation du dispositif passe-barre 10 préassemblé peut être réalisée en amont et éventuellement sur un lieu distant du lieu où se trouve de l'équipement électrique 25.

Le dispositif passe-barre 10 préassemblé est alors assemblé avec l'équipement électrique 25.

Pour cela, on fait coulisser le dispositif passe-barre 10 préassemblé sur la barre 30 selon la direction longitudinale Z'Z à partir d'une extrémité de la barre 30 située dans le milieu extérieur 35 et jusqu'à ce que le corps vienne en contact avec la paroi 20.

Le coulissement peut se faire par l'extérieur de l'équipement électrique 25 sur lequel la barre 30 est déjà montée.

La barre 30 est alors reçue successivement dans les conduits d'engagement 45A et 50A des entretoises 45, 50.

Le coulissement du dispositif passe-barre 10 le long de la barre 30 est aisé du fait que la barre 30 est en contact avec les entretoises 45 et 50 plutôt qu'avec la gaine 55.

Si le joint extérieur 80 n'est pas déjà dans son logement de réception 110 et/ou le joint intérieur 75 n'est pas déjà en contact avec l'une ou l'autre des entretoises 45, 50, le coulissement du dispositif passe-barre 10 est particulièrement facile.

A l'issue du coulissement, l'épaulement 90 est positionné à proximité de la paroi 20, voire en contact avec la paroi 20, comme visible sur la figure 3.

Le cas échéant, les éléments filetés 20A de la paroi 20 sont insérés au moins partiellement dans les trous traversants 100 du couvercle 60A.

Le cas échéant, le joint d'étanchéité 120 est au préalable positionné dans le deuxième logement 115.

Le coulissement de la barre 30 est facile grâce aux matériaux choisis et notamment au fait que les matériaux utilisés pour les entretoises 45, 50 sont moins souples que le matériau de la gaine 55. En particulier, les entretoises 45, 50 permettent de rigidifier la gaine 55, dont la souplesse permet une insertion facile dans le corps 60 mais ne permettrait pas un coulissement facile de la barre 30 dans la gaine elle-même directement.

Le coulissement de la barre 30 peut donc être effectué plus rapidement qu'avec les dispositifs passe-barre de l'art antérieur. Il peut en outre être effectué sans recourir à un lubrifiant.

Enfin, le corps 60 est fixé sur la paroi 20 au moyen des moyens de fixation amovibles.

Par exemple, les éléments taraudés 98 sont vissés sur les éléments filetés 20A.

A l'issue de la fixation, le joint intérieur 75 est en contact avec les entretoises inférieure 50 et supérieure 45 ; le joint extérieur 80 est positionné dans son logement de réception 110, en contact avec la surface de contact supérieure 114 et la surface de contact inférieure 112 ; et le cas échéant, le joint d'étanchéité 120 est positionné dans le deuxième logement 120.

Avantageusement, les moyens amovibles sont configurés pour permettre la compression du joint intérieur 75 et/ou du joint extérieur 80 et/ou du joint d'étanchéité. Par exemple, le serrage plus ou moins intense des éléments filetés permet d'ajuster le niveau de compression de tout ou partie de ces joints, de manière à assurer l'étanchéité aux fluides juste après assemblage, voire en cours d'utilisation de l'équipement électrique 25 si nécessaire.

L'étanchéité aux fluides au niveau de l'orifice 15 est alors entièrement assurée grâce au dispositif passe-barre 10.

Si la barre 30 est munie d'éléments 30B, ces éléments 30B sont avantageusement configurés pour venir en contact avec au moins l'une des entretoises 45, 50 à l'issue du montage et/ou avec la gaine 55.

En particulier, un élément 30B peut aussi être configuré pour être positionné en contact avec l'extrémité supérieure 55A de la gaine 55 et/ou une extrémité supérieure de l'entretoise 45, ou encore en contact avec l'extrémité inférieure 55B de la gaine 55 et/ou une extrémité inférieure de l'entretoise 50.

Les éléments 30B peuvent aussi être configurés pour ne pas être en contact avec la gaine 55, de manière à limiter les risques d'endommagement du matériau constituant la gaine 55, plus souple que celui des entretoises 45, 50.

Lors de l'assemblage du dispositif passe-barre 10 préassemblé avec l'équipement électrique 25, un premier élément 30B peut être positionné sur la barre 30 du côté du volume interne de l'équipement électrique 25 avant coulissement du dispositif passe-barre 10 préassemblé. Le dispositif passe-barre 10 préassemblé peut alors être positionné en contact avec le premier élément 30B à l'issue du coulissement.

Un deuxième élément 30B peut être positionné sur la barre 30 du côté du milieu extérieur 35 après coulissement du dispositif passe-barre 10 préassemblé, notamment en contact avec l'extrémité supérieure 55A de la gaine 55 et/ou une extrémité supérieure de l'entretoise 45.

Le deuxième élément 30B peut être mis en place avant la fixation du corps 60 sur la paroi 20 au moyen des moyens de fixation amovibles.

Le premier élément 30B et/ou le deuxième élément 30B facilitent le maintien du dispositif passe-barre 10 préassemblé en position par rapport à l'équipement électrique 25 avant sa fixation sur la paroi 20.

Le dispositif passe-barre 10 peut être démonté pour la maintenance de l'équipement électrique 25 par les étapes inverses du procédé de montage, notamment par l'extérieur de l'équipement électrique 25 sans démontage de la barre 30. De même que pour le montage, le démontage est facile et rapide grâce à la conception particulière du dispositif passe-barre 10 selon l'invention et notamment à l'utilisation d'une gaine 55 comprenant le joint extérieur 80 et de deux entretoises 45, 50 séparées.

Notamment, si la barre est munie d'éléments 30B, ces éléments peuvent être configurés pour être démontables.

Dans ce cas, le démontage du dispositif passe-barre 10 peut comprendre une étape préalable de démontage des éléments 30B, notamment du deuxième élément 30B positionné du côté du milieu extérieur 35.

## Revendications

1. Dispositif passe-barre (10), destiné à être monté au travers d'un orifice (15) ménagé dans une paroi (20) d'un équipement électrique (25) pour le passage d'une barre (30) conductrice à travers la paroi (20), la paroi (20) séparant un volume interne de l'équipement électrique (25) d'un milieu extérieur (35), le dispositif passe-barre (10) comprenant :
a) une entretoise inférieure (50) et une entretoise supérieure (45), s'étendant chacune selon une direction longitudinale (Z'Z) et définissant chacune un conduit traversant (50A, 45A) d'engagement de la barre (30) ;
b) une gaine (55), s'étendant selon la direction longitudinale (Z'Z) entre une extrémité inférieure (55B) à positionner à l'intérieur du volume interne et une extrémité supérieure (55A) à positionner du côté du milieu extérieur (35), et comprenant :
- une paroi intérieure (55C) qui définit un conduit inférieur (70) de réception de l'entretoise inférieure et un conduit supérieur (65) de réception de l'entretoise supérieure, les conduits inférieur (70) et supérieur (65) étant séparés dans la direction longitudinale (Z'Z) par un joint intérieur (75) faisant saillie à partir de la paroi intérieure (55C) sur toute sa périphérie,
- un joint extérieur (80) faisant saillie à partir d'une paroi extérieure (55D) de la gaine sur toute sa périphérie, le joint extérieur (80) étant positionné à distance de l'extrémité inférieure (55B) et de l'extrémité supérieure (55A) de la gaine (55) dans la direction longitudinale (Z'Z),
c) un corps (60) configuré pour s'étendre de part et d'autre de la paroi (20) de l'équipement électrique (25), traversé de part en part selon la direction longitudinale (Z'Z) par un conduit d'insertion (85) de la gaine (55) et comprenant :
- un épaulement (90) configuré pour venir en appui sur la paroi (20) de l'équipement électrique (25) sur toute la périphérie de l'orifice (15),
- des moyens de fixation amovibles (98, 100) sur la paroi (20) de l'équipement électrique (25) du côté du milieu extérieur (35), et
- un logement (110) de réception du joint extérieur (80) s'étendant radialement relativement à la direction longitudinale (Z'Z) à partir du conduit d'insertion (85), le logement (110) de réception étant configuré pour que le joint extérieur (80) soit en contact avec une surface de contact inférieure (112) du corps (60) et avec une surface de contact supérieure (114) formée par une paroi du logement (110) de réception lorsque le corps (60) est fixé sur la paroi (20) de l'équipement électrique (25) ;
la gaine (55) et les entretoises inférieure (50) et supérieure (45) étant formées dans des matériaux isolants électriques et configurés pour que la gaine (55) soit plus souple que les entretoises inférieure (50) et supérieure (45).

2. Dispositif passe-barre (10) selon la revendication 1, dans lequel le corps (60) comprend :
a) un élément traversant (60B)
- configuré pour s'étendre de part et d'autre de la paroi (20) de l'équipement électrique (25),
- traversé de part en part selon la direction longitudinale (Z'Z) par une portion inférieure (85A) du conduit d'insertion (85) de la gaine (55),
- comprenant la surface de contact inférieure (112) du joint extérieur (80) et au moins une partie de l'épaulement (90); et
b) un couvercle (60A) traversé de part en part par une portion supérieure (85B) du conduit d'insertion (85) de la gaine (55), le couvercle (60A) comprenant les moyens de fixation amovibles (98, 100) et la surface de contact supérieure (114) du joint extérieur (80),
le logement (110) de réception du joint extérieur (80) étant en outre un logement de réception de l'élément traversant (60B).

3. Dispositif passe-barre (10) selon la revendication précédente, dans lequel le corps (60) comprend en outre un joint d'étanchéité (120) configuré pour assurer l'étanchéité à l'air du logement de réception (110) au niveau de la paroi (20) de l'équipement électrique (25) lorsque l'élément traversant y est reçu (60) et que le corps est fixé sur ladite paroi (20).

4. Dispositif passe-barre (10) selon l'une quelconque des revendications précédentes, dans lequel le joint intérieur (75) est configuré pour être comprimé entre les entretoises inférieure (50) et supérieure (45).

5. Dispositif passe-barre (10) selon l'une quelconque des revendications précédentes, dans lequel la gaine (55) est formée dans un matériau élastomère.

6. Dispositif passe-barre (10) selon l'une quelconque des revendications précédentes, dans lequel les entretoises inférieure (50) et supérieure (45) sont formées chacune dans un matériau choisi parmi un plastique thermodurcissable et un matériau thermoplastique.

7. Dispositif passe-barre (10) selon l'une quelconque des revendications précédentes, dans lequel une pluralité de jupes (55E) espacées les unes par rapport aux autres selon la direction longitudinale (Z'Z) sont formées à proximité de l'extrémité inférieure (55B) et/ou de l'extrémité supérieure (55A) de la gaine (55).

8. Dispositif passe-barre (10) selon la revendication précédente, dans lequel les jupes (55E) formées à proximité de l'extrémité supérieure sont plus larges selon une direction transversale orthogonale à la direction longitudinale et/ou plus espacées les unes des autres selon la direction longitudinale que les jupes (55E) formées à proximité de l'extrémité inférieure.

9. Dispositif passe-barre (10) selon l'une quelconque des revendications précédentes, dans lequel la gaine (55) est monobloc.

10. Dispositif passe-barre (10) selon l'une quelconque des revendications précédentes, dans lequel le joint intérieur (75) et/ou le joint extérieur (85) sont configurés pour assurer l'étanchéité à l'air du dispositif passe-barre (10) lorsqu'il est monté sur la barre (30).

11. Equipement électrique comprenant un dispositif passe-barre (10) selon l'une quelconque des revendications précédentes.

12. Procédé de montage d'un dispositif passe-barre (10) selon l'une quelconque des revendications précédentes sur un équipement électrique (25), le procédé comprenant:
a) l'insertion de la gaine (55) dans le conduit d'insertion (85) de la gaine (55), de sorte que le joint extérieur (80) soit positionné dans le logement (110) de réception, puis l'insertion de l'entretoise inférieure (50) dans le conduit inférieur (70) et l'insertion de l'entretoise supérieure (45) dans le conduit supérieur (65) de sorte que l'entretoise inférieure (50) et l'entretoise supérieure (45) viennent en contact avec le joint intérieur (75) et de part et d'autre du joint intérieur (75), de manière à former un dispositif passe-barre préassemblé ;
b) le coulissement du dispositif passe-barre préassemblé sur la barre (30) à partir d'une extrémité de la barre (30) située du côté du milieu extérieur (35) jusqu'à ce que le corps (60) vienne en contact avec la paroi (20) de l'équipement électrique (25) ;
c) la fixation du corps (60) sur la paroi (20) de l'équipement électrique (25) au moyen des moyens de fixation amovibles (98,100).

13. Procédé selon la revendication précédente, **caractérisé en ce que** l'étape b) est mise en oeuvre sans recourir à un lubrifiant.

## Patentansprüche

1. Stromschienendurchführung (10), die dazu bestimmt ist, durch eine in einer Wand (20) einer elektrischen Einrichtung (25) ausgebildete Öffnung (15) montiert zu werden, zur Durchführung einer leitenden Schiene (30) durch die Wand (20), wobei die Wand (20) einen Innenraum der elektrischen Einrichtung (25) von einer Außenumgebung (35) trennt, wobei die Stromschienendurchführung (10) umfasst:
a) ein unteres Abstandsstück (50) und ein oberes Abstandsstück (45), die sich jeweils entlang einer Längsrichtung (Z'Z) erstrecken und jeweils einen Durchgangskanal (50A, 45A) zum Einführen der Schiene (30) definieren;
b) eine Hülse (55), die sich entlang der Längsrichtung (Z'Z) zwischen einem unteren Ende (55B), das innerhalb des Innenraums zu positionieren ist, und einem oberen Ende (55A), das auf der Seite der Außenumgebung (35) zu positionieren ist, erstreckt und umfasst:
- eine Innenwand (55C), die einen unteren Kanal (70) zur Aufnahme des unteren Abstandsstücks und einen oberen Kanal (65) zur Aufnahme des oberen Abstandsstücks definiert, wobei der untere Kanal (70) und der obere Kanal (65) in der Längsrichtung (Z'Z) durch eine innere Dichtung (75) getrennt sind, die von der Innenwand (55C) über ihren gesamten Umfang vorspringt,
- eine äußere Dichtung (80), die von einer Außenwand (55D) der Hülse über ihren gesamten Umfang vorspringt, wobei die äußere Dichtung (80) in der Längsrichtung (Z'Z) in einem Abstand von dem unteren Ende (55B) und von dem oberen Ende (55A) der Hülse (55) positioniert ist,
c) einen Körper (60), der dazu konfiguriert ist, sich beiderseits der Wand (20) der elektrischen Einrichtung (25) zu erstrecken, der entlang der Längsrichtung (Z'Z) vollständig von einem Einführkanal (85) der Hülse (55) durchsetzt ist und umfasst:
- einen Absatz (90), der dazu konfiguriert ist, über den gesamten Umfang der Öffnung (15) an der Wand (20) der elektrischen Einrichtung (25) zur Anlage zu kommen,
- lösbare Befestigungsmittel (98, 100) an der Wand (20) der elektrischen Einrichtung (25) auf der Seite der Außenumgebung (35), und
- eine Aufnahmekammer (110) zur Aufnahme der äußeren Dichtung (80), die sich radial bezüglich der Längsrichtung (Z'Z) von dem Einführkanal (85) aus erstreckt, wobei die Aufnahmekammer (110) dazu konfiguriert ist, dass die äußere Dichtung (80) mit einer unteren Kontaktfläche (112) des Körpers (60) und mit einer oberen Kontaktfläche (114), die durch eine Wand der Aufnahmekammer (110) gebildet ist, in Kontakt ist, wenn der Körper (60) an der Wand (20) der elektrischen Einrichtung (25) befestigt ist;
wobei die Hülse (55) und die unteren (50) und oberen (45) Abstandsstücke aus elektrisch isolierenden Materialien gebildet und dazu konfiguriert sind, dass die Hülse (55) flexibler ist als die unteren (50) und oberen (45) Abstandsstücke.

2. Stromschienendurchführung (10) nach Anspruch 1, wobei der Körper (60) umfasst:
a) ein Durchführungselement (60B)
- das dazu konfiguriert ist, sich beiderseits der Wand (20) der elektrischen Einrichtung (25) zu erstrecken,
- das entlang der Längsrichtung (Z'Z) vollständig von einem unteren Abschnitt (85A) des Einführkanals (85) der Hülse (55) durchsetzt ist,
- das die untere Kontaktfläche (112) der äußeren Dichtung (80) und zumindest einen Teil des Absatzes (90) umfasst; und
b) einen Deckel (60A), der vollständig von einem oberen Abschnitt (85B) des Einführkanals (85) der Hülse (55) durchsetzt ist, wobei der Deckel (60A) die lösbaren Befestigungsmittel (98, 100) und die obere Kontaktfläche (114) der äußeren Dichtung (80) umfasst,
wobei die Aufnahmekammer (110) zur Aufnahme der äußeren Dichtung (80) ferner eine Aufnahmekammer des Durchführungselements (60B) ist.

3. Stromschienendurchführung (10) nach dem vorhergehenden Anspruch, wobei der Körper (60) ferner eine Dichtung (120) umfasst, die dazu konfiguriert ist, die Luftdichtheit der Aufnahmekammer (110) auf Höhe der Wand (20) der elektrischen Einrichtung (25) sicherzustellen, wenn das Durchführungselement darin aufgenommen ist (60) und der Körper an der genannten Wand (20) befestigt ist.

4. Stromschienendurchführung (10) nach einem der vorhergehenden Ansprüche, wobei die innere Dichtung (75) dazu konfiguriert ist, zwischen dem unteren Abstandsstück (50) und dem oberen Abstandsstück (45) zusammengedrückt zu werden.

5. Stromschienendurchführung (10) nach einem der vorhergehenden Ansprüche, wobei die Hülse (55) aus einem Elastomermaterial gebildet ist.

6. Stromschienendurchführung (10) nach einem der vorhergehenden Ansprüche, wobei das untere Abstandsstück (50) und das obere Abstandsstück (45) jeweils aus einem Material gebildet sind, das aus einem duroplastischen Kunststoff und einem thermoplastischen Material ausgewählt ist.

7. Stromschienendurchführung (10) nach einem der vorhergehenden Ansprüche, wobei eine Vielzahl von Schürzen (55E), die entlang der Längsrichtung (Z'Z) voneinander beabstandet sind, in der Nähe des unteren Endes (55B) und/oder des oberen Endes (55A) der Hülse (55) gebildet sind.

8. Stromschienendurchführung (10) nach dem vorhergehenden Anspruch, wobei die in der Nähe des oberen Endes gebildeten Schürzen (55E) entlang einer zur Längsrichtung orthogonalen Querrichtung breiter und/oder entlang der Längsrichtung weiter voneinander beabstandet sind als die in der Nähe des unteren Endes gebildeten Schürzen (55E).

9. Stromschienendurchführung (10) nach einem der vorhergehenden Ansprüche, wobei die Hülse (55) einstückig ist.

10. Stromschienendurchführung (10) nach einem der vorhergehenden Ansprüche, wobei die innere Dichtung (75) und/oder die äußere Dichtung (85) dazu konfiguriert sind, die Luftdichtheit der Stromschienendurchführung (10) sicherzustellen, wenn sie auf der Schiene (30) montiert ist.

11. Elektrische Einrichtung, umfassend eine Stromschienendurchführung (10) nach einem der vorhergehenden Ansprüche.

12. Verfahren zum Montieren einer Stromschienendurchführung (10) nach einem der vorhergehenden Ansprüche an einer elektrischen Einrichtung (25), wobei das Verfahren umfasst:
a) das Einführen der Hülse (55) in den Einführkanal (85) der Hülse (55), sodass die äußere Dichtung (80) in der Aufnahmekammer (110) positioniert ist, dann das Einführen des unteren Abstandsstücks (50) in den unteren Kanal (70) und das Einführen des oberen Abstandsstücks (45) in den oberen Kanal (65), sodass das untere Abstandsstück (50) und das obere Abstandsstück (45) mit der inneren Dichtung (75) und beiderseits der inneren Dichtung (75) in Kontakt kommen, um eine vormontierte Stromschienendurchführung zu bilden;
b) das Aufschieben der vormontierten Stromschienendurchführung auf die Schiene (30) von einem Ende der Schiene (30) aus, das auf der Seite der Außenumgebung (35) liegt, bis der Körper (60) mit der Wand (20) der elektrischen Einrichtung (25) in Kontakt kommt;
c) das Befestigen des Körpers (60) an der Wand (20) der elektrischen Einrichtung (25) mittels der lösbaren Befestigungsmittel (98,100).

13. Verfahren nach dem vorhergehenden Anspruch, **dadurch gekennzeichnet, dass** der Schritt b) ohne Verwendung eines Schmiermittels durchgeführt wird.

## Claims

1. Busbar bushing device (10), intended to be mounted through an orifice (15) formed in a wall (20) of an electrical equipment item (25) for the passage of a conductive bar (30) through the wall (20), the wall (20) separating an internal volume of the electrical equipment item (25) from an external environment (35), the busbar bushing device (10) comprising:
a) a lower spacer (50) and an upper spacer (45), each extending along a longitudinal direction (Z'Z) and each defining a through duct (50A, 45A) for engaging the bar (30);
b) a sleeve (55), extending along the longitudinal direction (Z'Z) between a lower end (55B) to be positioned inside the internal volume and an upper end (55A) to be positioned on the side of the external environment (35), and comprising:
- an inner wall (55C) which defines a lower duct (70) for receiving the lower spacer and an upper duct (65) for receiving the upper spacer, the lower (70) and upper (65) ducts being separated in the longitudinal direction (Z'Z) by an inner seal (75) projecting from the inner wall (55C) over its entire periphery,
- an outer seal (80) projecting from an outer wall (55D) of the sleeve over its entire periphery, the outer seal (80) being positioned at a distance from the lower end (55B) and from the upper end (55A) of the sleeve (55) in the longitudinal direction (Z'Z),
c) a body (60) configured to extend on either side of the wall (20) of the electrical equipment item (25), passed through from end to end along the longitudinal direction (Z'Z) by a duct (85) for inserting the sleeve (55) and comprising:
- a shoulder (90) configured to bear against the wall (20) of the electrical equipment item (25) over the entire periphery of the orifice (15),
- removable fastening means (98, 100) on the wall (20) of the electrical equipment item (25) on the side of the external environment (35), and
- a receiving housing (110) for receiving the outer seal (80) extending radially relative to the longitudinal direction (Z'Z) from the insertion duct (85), the receiving housing (110) being configured such that the outer seal (80) is in contact with a lower contact surface (112) of the body (60) and with an upper contact surface (114) formed by a wall of the receiving housing (110) when the body (60) is fastened to the wall (20) of the electrical equipment item (25) ;
the sleeve (55) and the lower (50) and upper (45) spacers being formed from electrically insulating materials and configured such that the sleeve (55) is more flexible than the lower (50) and upper (45) spacers.

2. Busbar bushing device (10) according to claim 1, wherein the body (60) comprises:
a) a through element (60B)
- configured to extend on either side of the wall (20) of the electrical equipment item (25),
- passed through from end to end along the longitudinal direction (Z'Z) by a lower portion (85A) of the insertion duct (85) for the sleeve (55),
- comprising the lower contact surface (112) of the outer seal (80) and at least a portion of the shoulder (90); and
b) a cover (60A) passed through from end to end by an upper portion (85B) of the insertion duct (85) for the sleeve (55), the cover (60A) comprising the removable fastening means (98, 100) and the upper contact surface (114) of the outer seal (80),
the receiving housing (110) for receiving the outer seal (80) furthermore being a housing for receiving the through element (60B).

3. Busbar bushing device (10) according to the preceding claim, wherein the body (60) further comprises a sealing gasket (120) configured to provide airtightness of the receiving housing (110) at the wall (20) of the electrical equipment item (25) when the through element is received therein (60) and the body is fastened to said wall (20).

4. Busbar bushing device (10) according to any one of the preceding claims, wherein the inner seal (75) is configured to be compressed between the lower (50) and upper (45) spacers.

5. Busbar bushing device (10) according to any one of the preceding claims, wherein the sleeve (55) is formed from an elastomer material.

6. Busbar bushing device (10) according to any one of the preceding claims, wherein the lower (50) and upper (45) spacers are each formed from a material selected from a thermosetting plastic and a thermoplastic material.

7. Busbar bushing device (10) according to any one of the preceding claims, wherein a plurality of skirts (55E) spaced apart from one another along the longitudinal direction (Z'Z) are formed close to the lower end (55B) and/or the upper end (55A) of the sleeve (55).

8. Busbar bushing device (10) according to the preceding claim, wherein the skirts (55E) formed close to the upper end are wider along a transverse direction orthogonal to the longitudinal direction and/or are spaced farther apart from one another along the longitudinal direction than the skirts (55E) formed close to the lower end.

9. Busbar bushing device (10) according to any one of the preceding claims, wherein the sleeve (55) is unitary.

10. Busbar bushing device (10) according to any one of the preceding claims, wherein the inner seal (75) and/or the outer seal (85) are configured to provide airtightness of the busbar bushing device (10) when it is mounted on the bar (30).

11. Electrical equipment item comprising a busbar bushing device (10) according to any one of the preceding claims.

12. Method for mounting a busbar bushing device (10) according to any one of the preceding claims on an electrical equipment item (25), the method comprising:
a) inserting the sleeve (55) into the insertion duct (85) of the sleeve (55), such that the outer seal (80) is positioned in the receiving housing (110), then inserting the lower spacer (50) into the lower duct (70) and inserting the upper spacer (45) into the upper duct (65) such that the lower spacer (50) and the upper spacer (45) come into contact with the inner seal (75) and on either side of the inner seal (75), so as to form a preassembled busbar bushing device;
b) sliding the preassembled busbar bushing device over the bar (30) from an end of the bar (30) located on the side of the external environment (35) until the body (60) comes into contact with the wall (20) of the electrical equipment item (25);
c) fastening the body (60) to the wall (20) of the electrical equipment item (25) by means of the removable fastening means (98,100).

13. Method according to the preceding claim, **characterized in that** step b) is implemented without using a lubricant.
